Europäisches Patentamt

European Patent Office

Office européen des brevets

(11) Veröffentlichungsnummer: **0 246 218 B1**

## EUROPÄISCHE PATENTSCHRIFT

(45) Veröffentlichungstag der Patentschrift: **18.08.93**

(51) Int. Cl.⁵: **G06F 11/18**

(21) Anmeldenummer: **87890089.3**

(22) Anmeldetag: **07.05.87**

(54) **Fehlertolerantes Datenverarbeitungssystem.**

(30) Priorität: **14.05.86 AT 1286/86**

(43) Veröffentlichungstag der Anmeldung:
**19.11.87 Patentblatt 87/47**

(45) Bekanntmachung des Hinweises auf die
Patenterteilung:
**18.08.93 Patentblatt 93/33**

(84) Benannte Vertragsstaaten:
**AT BE CH DE ES FR GB GR IT LI LU NL SE**

(56) Entgegenhaltungen:
**US-A- 4 392 199**

**IEEE'85 CONFERENCE RECORD, 19th ASILO-
MAR CONFERENCE ON CIRCUITS, SYSTEMS
& COMPUTERS, Pacific Grove, CA, 6.-8. November 1985, Seiten 369-374, IEEE; L. AB-
BOTT: "A synergistic fault tolerant computer
design for an N-version programming environment"**

**IEEE '83, FTCS 13th ANNUAL INTERNATIO-
NAL SYMPOSIUM, Milano, 28.-30. Juni 1983,
Seiten 182-185, IEEE, New York, US; P. GUN-
NINGBERG: "Voting and redundancy management implemented by protocols in distributed systems"**

(73) Patentinhaber: **Alcatel Austria Aktiengesellschaft
Scheydgasse 41
A-1210 Wien(AT)**

(72) Erfinder: **Theuretzbacher, Norbert, Dipl.-Ing.
Eckpergasse 13/5
A-1180 Wien(AT)**

EP 0 246 218 B1

IEEE'80, FTCS - THE 10th INTERNATIONAL SYMPOSIUM ON FAULT-TOLERANT COMPUTING, Kyoto, 1.-3. Oktober 1980, Seiten 372-374, IEEE, New York, US; K. KAWAKUBO et al.: "The architecture of a fail-safe and fault-tolerant computer for railway signalling device"

IEEE'86, FTCS - 16th ANNUAL INTERNATIONAL SYMPOSIUM ON FAULT-TOLERANT COMPUTING SYSTEMS, Wien, 1.-4. Juli 1986, Seiten 144-150, IEEE, New York, US; N. THEURETZBACHER: ""Votrics": voting triple modular computing system"

IEEE'86, FTCS - 16th ANNUAL INTERNATIONAL SYMPOSIUM ON FAULT-TOLERANT COMPUTING SYSTEMS, Wien, 1.-4. Juli 1986, Seiten 190-195, IEEE, New York, US; T. YONEDA et al.: "The container concept for relaying packets in fault-tolerant computer networks"

## Beschreibung

Die Erfindung bezieht sich auf ein fehlertolerantes Datenverarbeitungssystem bestehend aus mehreren Rechnereinheiten, sowie mehreren logischen Entscheidungseinrichtungen (Votern) die die Richtigkeit einer Nachricht aus der bezogen auf die Gesamtzahl der Rechnereinheiten vorgegebenen Mehrheit der Nachrichten ableitet.

Fehlertolerante Datenverarbeitungssysteme sind beispielsweise der US-PS 4 375 683 zu entnehmen. Bei dieser bekannten Ausbildung wird eine sogenannte tripelmodulare Redundanz angewandt, wobei jeweils drei Rechner mit einer gemeinsamen logischen Entscheidungseinheit verbunden sind. Derartige Schaltungsanordnungen dienen in erster Linie der Erzielung einer höheren Systemzuverlässigkeit bei nicht vorhersehbaren Hardwareausfällen. Bei dieser bekannten Einrichtung arbeitet die logische Entscheidungseinheit auf der Basis einer Mehrheitsabstimmung und das System kann auch dann noch sinnvoll weiterbetrieben werden, wenn eine Rechnereinheit der drei zu einem Knoten zusammengefaßten Einheiten ein fehlerhaftes Signal abgibt. Die logische Entscheidungseinheit bildet bei zwei gleichartigen Signalen, welche von einem dritten Signal abweichen, eine Mehrheitsentscheidung zugunsten der gleichartigen Signale und dieses Mehrheitsergebnis wird in der Datenverarbeitung weiterverarbeitet.

Insbesondere für den Ablauf in komplexen Datenverarbeitungssystemen, bei welchen nichtperiodische und indeterministische Ereignisse verarbeitet werden sollen und ein ereignisgesteuertes System geschaffen werden soll, bestehen große Probleme bei der Synchronisation der einzelnen Einheiten des Datenverarbeitungssystems. Zur Herstellung einer globalen Zeitbasis in sämtlichen Datenverarbeitungseinheiten wäre ein beträchtlicher Synchronisations- und Kommunikationsaufwand erforderlich, welcher bis zur Hälfte der zur Verfügung stehenden Rechnerleistung verwenden würde. Bei der bekannten Einrichtung nach der US-PS 4 375 683 ist eine Vernetzbarkeit zu komplexeren Datenverarbeitungssytemen nicht ohne weiteres möglich und die Anwendbarkeit der in der US-PS 4 375 683 dargelegten Grundprinzipien der tripelmodularen Redundanz beschränkt sich auf relativ einfache zyklisch ablaufende und leicht synchronisierbare Ereignisse. Anwendungen, deren Natur zyklischer Art ist, sind beispielsweise beim Steuern der Treibstoffzufuhr zu einem Motor in Abhängigkeit von Leistungsparametern gegeben. Für Prozeßsteuerungen, die von Natur aus dezentrale Ereignisse erfassen, wie beispielsweise für Eisenbahnsicherungsanlagen, ist zusätzlich ein hohes Maß an dezentraler Datenverarbeitung vorgesehen. Gerade bei solchen Anwendungen ist es von besonderem Vorteil, eine Ausbildung des fehlertoleranten Datenverarbeitungssystemes zu schaffen, mit welcher der Leistungsaufwand für die Kommunikation zwischen den einzelnen Rechnereinheiten bzw. Knoten wesentlich verringert und gleichzeitig ein hohes Maß an Systemzuverlässigkeit aufrechterhalten wird. Die Erfindung zielt weiters darauf ab, auch bei nichtperiodischen und indeterministischen Ereignissen ein hohes Maß an Zuverlässigkeit und Fehlertoleranz sicherzustellen.

Zur Lösung dieser Aufgabe besteht die Erfindung im wesentlichen darin, daß jeder Rechnereinheit ein Input/Output-Voter zugeordnet ist, der über die Input- bzw. Output-Nachrichten der Inputkanäle bzw. Outputkanäle aller Rechnereinheiten eines Votingknotens abstimmt, wobei jeder Votingknoten aus mehrere Rechnereinheiten (SRUs) besteht, daß jeder Input/Output-Voter den Inhalt der von ihm über die Inputkanäle bzw. über die Outputkanäle empfangenen Nachricht durch Aussenden einer Votingnachricht mittels Votinglinks an alle anderen im selben Votingknoten befindlichen Input/Output-Voter weitergibt, sodann jeder Input/Output-Voter über seine eigene und alle die von den anderen Input/Output-Voter desselben Votingknotens von ihm empfangenen Votingnachrichten abstimmt, daß jeder Rechnereinheit ein Sequenzvoter für die Entscheidung über die korrelate Reihenfolge der zu Verarbeitenden Nachrichten zugeordnet ist, dem die während des Input/Output-Votings als richtig erkannte Nachricht zugeführt wird, daß jeder Sequenzvoter den Inhalt der von ihm empfangenen Nachricht durch Aussenden einer Sequenzvotingnachricht mittels Votinglinks an alle anderen im selben Votingknoten befindlichen Sequenzvoter weitergibt, sodann ein Voting über alle erhaltenen Sequenzvotingnachrichten einschließlich der eigenen Nachricht durchführt und die als richtig erkannte einheitliche Nachrichtensequenz an seinen eigenen Applikationsprozeß weitergibt.

Die Prozeßverarbeitung kann aufgrund der gewählten Vernetzung nach einem einfachen prioritätsgesteuerten Verfahren ablaufen. Eine systemweite Zeitbasis kann hier zur Synchronisation der Prozeßverarbeitung entfallen und es besteht auch keine Notwendigkeit für einen Zeitraster für die Durchführung von Prozessen. Die Verbindung der einzelnen, Datensignale liefernden oder verarbeitenden Rechnereinheiten miteinander kann durch serielle Punkt-zu-Punkt-Verbindungen als Vernetzung ausgebildet sein.

Die notwendigerweise und unvermeidlich auftretende zeitliche Unschärfe bei der Übertragung von Nachrichten über diese Verbindungen kann durch eine geeignete Entscheidungslogik beherrscht werden. In vorteilhafter Weise ist die Ausbildung hiebei so getroffen, daß jede Datensignale liefernde oder verarbeitende Rechnereinheit we-

nigstens einen Voter für die Entscheidung über die Fehlerfreiheit von Eingangs- und/oder Ausgangssignalen aufweist, wobei die vor allen Dingen bei nichtzyklischen Arbeitsweisen und bei Wegfall einer globalen Zeitbasis entstehenden Probleme mit der Reihenfolge der einzelnen Nachrichten dadurch wirkungsvoll beherrscht werden können, daß jede Datensignale liefernde oder verarbeitende Rechnereinheit einen Sequenzvoter für die Entscheidung über die korrekte Reihenfolge der zu verarbeitenden Signale enthält.

Der wesentliche Vorteil der erfindungsgemäßen Vernetzung liegt darin, daß die Übertragung von Nachrichten seriell erfolgen kann, wodurch der Leitungsaufwand naturgemäß wesentlich herabgesetzt wird. Die Möglichkeit der seriellen Übertragung ist in erster Linie der Existenz des Sequenzvoters zu verdanken, welcher bei nichtperiodischen indeterministischen Ereignissen eine gegebenenfalls aufgetretene Umstellung der Reihenfolge der einzelnen Signale bzw. Nachrichten wiederum korrigiert. Die Verbindungen bzw. Links zwischen den einzelnen Rechnereinheiten sind bidirektional, so daß eine vollständige Vermaschung und ein vollständiger Austausch über die Vorgänge in den einzelnen knoten des fehlertoleranten Datenverarbeitungssystems untereinander erfolgt.

Um eine vollständige Kommunikation über die Fehlerfreiheit, sowohl was die Vollständigkeit und Korrektheit der Eingangs- oder Ausgangssignale anlangt, als auch was die korrekte Reihenfolge der Signale betrifft, sicherzustellen, ist die Vernetzung so ausgeführt, daß die Signale der Voter für Eingangssignale den Sequenzvotern weiterleitbar sind. Der Sequenzvoter entscheidet hiebei über die Reihenfolge der Eingangssignale und diese Eingangssignale werden in der Folge in dieser Reihenfolge der Prozessverarbeitung übergeben und anschließend das Ergebnis dem Ausgangsvoter zur Verfügung gestellt. Die innere Logik der Entscheidungseinheiten bzw. Voter für die Eingangs- oder Ausgangssignale ist hiebei so ausgebildet, daß die Eingangs- und/oder Ausgangsvoter bei einer bezogen auf die Gesamtzahl der Kanäle vorgegebenen Mehrheit die Signale weiterleiten. Für eine klare Entscheidung ist hiebei eine ungerade Anzahl von Datensignale liefernden oder verarbeitenden Einheiten jeder Gruppe erforderlich, wobei die Entscheidungslogik im Fall von tripelmodularer Redundanz eine zwei-von-drei-Entscheidung treffen kann. Im Falle der Verknüpfung einer größeren Anzahl von Datensignale liefernden oder verarbeitenden Einheiten je Gruppe kann eine entsprechend schärfere Bedingung für die Richtigkeit der Signalverarbeitung aufgestellt werden, wodurch die Fehlertoleranz zwar abnimmt, die Zuverlässigkeit aber zunimmt.

Einer Weiterbildung der Erfindung sieht vor, daß jeder Voter die von ihm empfangene Votingnachricht eines anderen Voters desselben Votingknotens an alle übrigen Voter desselben Votingknotens weitergibt. Diese Maßnahme resultiert in einer virtuellen Verdopplung jedes Votinglinks und führt einen zusätzlichen Mechanismus ein, der dafür sorgt, daß Votingnachrichten über zwei unterschiedliche Wege an die Destinations-SRU gelangen. Der Ausfall eines Votinglinks wird zwar sicher erkannt, führt jedoch nicht zu einem Fehlereignis.

Im folgenden Beispiel wird das Prinzip eines hochzuverlässigen, fehlertoleranten Echtzeitsystems, das für den Einsatz in Failsafe-Steuerungen, wie beispielsweise in Eisenbahnstellwerken, konzipiert wurde, beschrieben. Dieses System wird im folgenden VOTRICS (VOting TRiple modular Computing System) genannt.

In der Zeichnung zeigt Fig. 1 eine allgemeine Darstellung eines VOTRICS-Systems, Fig. 2 die Kaskadierung von VOTRICS - Knoten, Fig. 3 die Konvergenz von VOTRICS - Knoten, Fig. 4 eine Divergenz von VOTRICS - Knoten, Fig. 5 die zeitliche Unschärfe bei der Übertragung einer Nachrichten-Triade zwischen zwei kaskadierten VOTRICS - Systemen, Fig. 6 das Zusammenspiel der Voterfunktionen in einer Rechnereinheit, Fig. 7 Votinglinks zwischen benachbarten VOTRICS - Rechnereinheiten und Fig. 8 eine virtuelle Duplizierung der Votinglinks durch Einsatz von Redundanz im Zeitbereich.

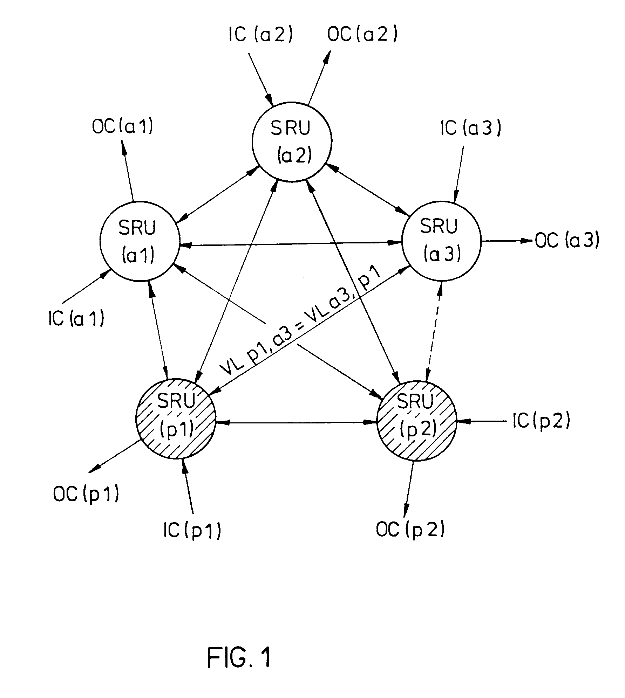

Ein VOTRICS-Netzwerk besteht aus einem beliebigen Netzwerk eines oder mehrerer VOTRICS - Knoten, wobei jeder dieser Knoten ein autonomes fehlertolerantes Subsystem bildet. In der Minimalausstattung besteht ein VOTRICS - Knoten aus drei selbstständigen Rechnereinheiten gleicher Konfiguration - sogenannte Smallest Replaceable Units (SRU) - die durch serielle bidirektionale Voting - Links VL lose miteinander vollständig vermascht sind. Jede SRU ist durch einen oder mehrere serielle Input- und Outputkanäle IC, OC mit der Umwelt verbunden. Fig. 1 zeigt die generellste Anordnung eines derartigen Systems bestehend aus SRU(al)...SRU(an), die in aktiver Redundanz zusammenarbeiten und SRU(pl)...SRU(pn) in passiver Redundanz (Standby).

Aufgrund des geforderten Zeitverhaltens ist bei Echtzeitsystemen für Failsafe - Steuerungen der einsatz von aktiver Redundanz erforderlich.

Eine Voraussetzung für die erfolgreiche Anwendung von aktiver Redundanz ist ein effizienter Votingmechanismus, der es gestattet die Ergebnisse und das Verhalten der in aktiver Redundanz arbeitenden Rechner laufend und unter Echtzeitbedingungen miteinander zu vegleichen. Um im Falle einer vom Votingmechanismus entdeckten Nichtübereinstimmung der Resultate bzw. des Verhaltens trotzdem richtig weiterarbeiten, also den Fehler tolerieren zu können (Fehler-Maskierung), sind mindestens 2N + 1 unabhängig voneinander ermittelte Resultate notwendig. Bei Verwendung von paralleler, aktiver Redundanz (gleichzeitige Ermittlung der Ergebnisse, je einmal pro Rechner) sind also mindestens drei Rechner notwendig, um einen Fehler tolerieren zu können.

Die in der Literatur übliche Bezeichnung für diese Form der redundanz ist "Triple Modulare Redundanz (TMR)". Aus Gründen der einfacheren Darstellung wird bei der näheren Bechreibung von VOTRICS nur mehr auf eine TMR - Konfiguration mit aktiver Redundanz eingegangen. In vielen der in der Literatur erwähnten fehlertoleranten Systeme wird spezielle Votinghardware eingesetzt. Wird diese Votinghardware nur einfach ausgeführt, so verschlechtert sich durch sie die mittlere Zeit zwischen Ausfällen (MTBF) des TMR-Systems. Der Ausfall der Votinghardware hat einen Totalausfall zur Folge. Es sind auch Lösungen mit redundanter Votinghardware bekannt (siehe beispielsweise: A. L. Hopkins Jr., FTMP - A Highly Reliable Fault-Tolerant Multi- processor for Aircraft, Proc. of the IEEE, Vol 66 No. 1o. pp 1221 - 1239, Oct 1978). Diese liefern zwar eine vergleichsweise bessere Zuverlässigkeit, erfordern allerding einen erheblichen Hardwaremehraufwand.

Im vorliegenden VOTRICS wird daher die Votingfunktion auf die einzelnen Rechnereinheiten (SRU's) des Systems aufgeteilt. In vorteilhafter Weise kann dies durch Softwarevoter in jeder einzelnen Rechnereinheit erfolgen. Die im folgneden beschriebenen Architektur läßt beliebige Kombinationen von SRU's in aktiver und/oder passiver Redundanz zu, kann also flexibel an die jeweils geforderte Zuverlässigkeit bzw. Verfügbarkeit angepasst werden.

VOTRICS unterscheidet sich in einigen grundsätzlichen Punkten ganz wesentlich von anderen fehlertoleranten Rechnersystemen mit vergleichbarer Zielsetzung:

1) keine globale Zeitbasis (keine enge Synchronisation der Uhren sämtlicher SRU's)

2) Indeterministisches First in - First out (FIFO) - Scheduling

3) keine 'Broadcast' - Kommunikation zwischen den SRU's.

Das Herstellen einer globalen (absoluten) Zeitbasis mit der nötigen Granularität im Millisekundenbereich in sämtlichen SRU's eines verteilten Systmes erfordert zusätzlichen Synchronisations- und Kommunikationsaufwand. Der in einem bekannten System angewandte Interaktive Konvergenz Algorithmus verursacht abhängig von der Zahl der eingesetzten SRU's und der Taktdrift einen Mehraufwand, der bei ca. 12-15 SRU's 100% der zur Verfügung stehenden Rechnerleistung verbruacht. (Siehe z.B.: C. Krishna & K. Shin, Synchronisation and Fault-Masking in Redundant Real-Time Systems, Dig. of Pap. 14th Int. Symp. on Fault-Tolerant Computing, pp. 152-157, 1984 und L. Lamport & P. M. Melliar-Smith, Synchronizing Clocks in the Presence of Faults, Journal of the ACM, Vol 32 No 1, pp. 52 - 78, Jan 1985). Zeitmessungen werden in VOTRICS nur mithilfe einer relativen Zeitbasis durchgeführt - es werden ausschließlich Zeitdifferenzen gemessen, d.h. die unvermeidliche Drift der Hardwaretimer kann sich nicht auswirken.

In VOTRICS wird das Prozeß-Scheduling nicht in einem fixen, periodischen Zeitschema durchgeführt, sondern nach einem einfachen, prioritätsgesteuerten FIFO-Verfahren. Sämtliche Aktionen erfolgen aufgrund von (stochastischen) externen und internen Ereignissen. Durch den Wegfall der Kopplung des Schedulings an eine systemweite Zeitbasis ist es notwendig, mithilfe geeigneter Synchronisationsmaßnahmen die Schedulingaktivitäten unter den in aktiver Redundanz arbeitenden SRU's zu koordinieren.

Sowohl VOTRICS-Knoten als auch die Rechnereinheiten SRU innerhalb eines Knotens sind durch serielle Punkt - zu - Punkt - Verbindungen miteinander vernetzt. Eine Alternative dazu wären Rechnerkopplungen über redundante "Broadcast-Busse". Die Punkt - zu - Punkt Verbindungen ergeben jedoch eine einfache Methode die Fehlerausbreitung zu begrenzen, da nur zwei Einheiten SRU durch einen Linkfehler beeinträchtigt werden können.

Erst durch diese Annahmen wird ein hohes Maß an Generalität und Transparenz der Fehlertoleranz-Mechanismen gegenüber der Applikation erreicht. So basieren beispielsweise die in den bekannten Systemen SIFT und August 300 angewandten Synchronisationsverfahren (siehe: C. B. Weinstock, "SIFT: System Design and Implementation", Dig. of Pap. 10th Int. Symposium on Fault Tolerant Computing, Kyoto, Japan, pp 75 - 77, Oct 1-3, 1980 und J. Wensley, "Industrial Control System does Things in three for Safety", Electronics, Jan 1983) auf einem simplen, periodischen an eine globale Zeitbasis gebundenen Scheduling-Verfahren. Der Vorteil der relativen Simplizität eines solchen Synchronisationsalgorithmus kann nur dort voll zum Tragen kommen, wo Anwendungen von Natur zyklischer Art sind (wie z.B. das Steuern der Treibstoffzufuhr zu einem Motor in Abhängigkeit der Leistungsparameter). Für Prozeßsteuerungen, die von Natur aus stochastisch sind (Eisenbahnsicherungsanlagen gehören in diese Gruppe) ist der Einsatz periodischer Systeme ungeeignet, da nicht-periodische Vorgänge nur schwer auf die zyklische Arbeitsweise des Betriebssystems abgebildet werden können.

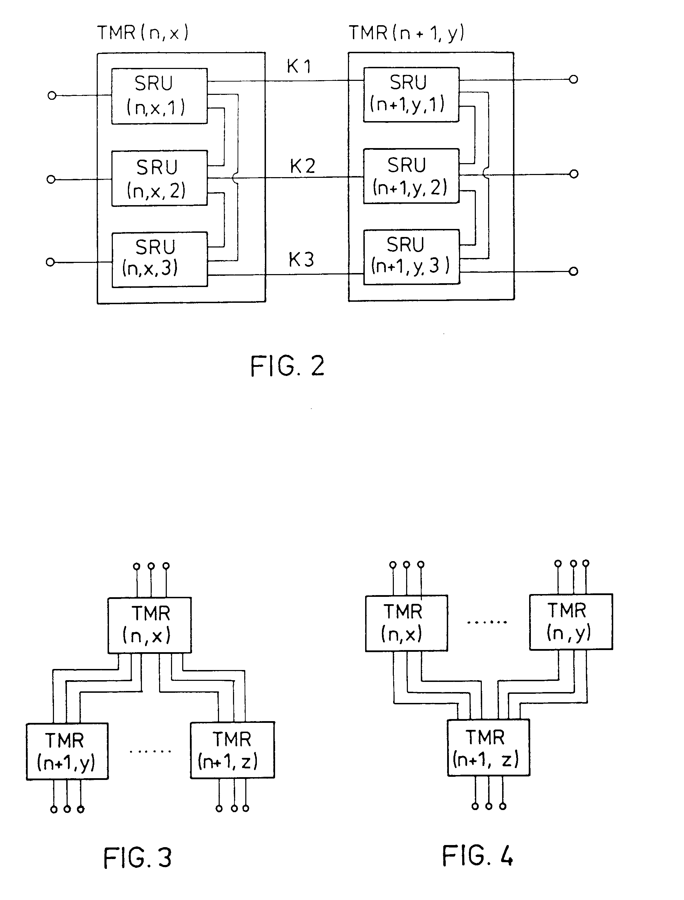

In den Fig. 2, 3 und 4 werden Vernetzungsmöglichkeiten von VOTRICS - Knoten gezeigt.

Jeder VOTRICS - Knoten bildet für sich ein fehlertolerantes Subsystem. Ein wesentliches Ziel dieses Konzepts ist die Möglichkeit, aus mehreren solchen Subsystemen ein verteiltes Rechnernetzwerk aufbauen zu können. Dazu ist es notwendig, VOTRICS - Knoten miteinander zu verbinden. Die Kopplung zweier VOTRICS - Knoten erfolgt durch drei Punkt-zu-Punkt-Verbindungen (paarweise Verbindung jeweils zweier benachbarter SRU's). Auf diese Art läßt sich durch Kaskadieren und Verzweigen jede beliebige Netztopologie erzeugen.

Wie in Fig. 2 gezeigt, sind der Knoten TMR-(n,x) (Knoten x der Ebene n) und der Knoten TMR-(n + 1,y) (Knoten y der Ebene n + 1) über die Kanäle K1, K2 und K3 in Kaskade geschaltet. Innerhalb jedes Knotens sind die drei Rechnereinheiten SRU-(1,2,3) vollständig miteinander vermascht.

In Fig. 3 ist die Konvergenz in einer VOTRICS-Anordnung dargestellt. Dabei sind die Ausgänge des Knotens TMR(n,x) -also Knoten X der Ebene n - mit den jeweiligen Eingängen der Knoten TMR-(n + 1,y) bzw. TMR(n + 1,z) - das sind die Knoten y bzw. z der Ebene n + 1 - verbunden.

Wie aus Fig 4 ersichtlich ist, ist in ähnlicher Weise auch eine Divergenz möglich. Im gezeigten Beispiel sind die Ausgänge der Knoten TMR(n,x) und TMR(n,y) mit den Eingängen des Knotens TMR(n + 1,z) verbunden.

Die gesamte Kommunikation und Synchronisation in einem VOTRICS-Netzwerk erfolgt ausschließlich mithilfe von "CHILL-Nachrichten" (Siehe: CCITT Recommendation z.200, "CCITT High Level Language CHILL", Yellow Book, Vol. VI, Fasc. VI.8. Geneva 1981). Das gilt sowohl für die Interprozesskommunikation innerhalb einer SRU, als auch ganz allgemein für die 'Inter-SRU-Kommunikation'.

Diese Art der Nachrichtenynchronisation entspricht dem Prinzip der Ereignissteuerung, wonach sämtliche Aktionen von Applikationsprozessen ausschließlich durch Nachrichten ausgelöst werden können. Dabei gibt es prinzipiell nur zwei Quellen, die von außen durch Ereignisse in den Ablauf eines Applikationsprozesses eingreifen können: Nachrichten, die von einer Nachbar-SRU kommend auf einem Input-Kanal (IC) empfangen werden und das Ablaufen von Zeitüberwachungen welche vom Betriebssystem in Timeout-Nachrichten umgesetzt werden.

Der Ablauf der CHILL-Applikation ist nicht interruptgesteuert; Interrupts werden vom Betriebssystem behandelt und dienen lediglich zur Abwicklung der seriellen Kommunikation zwischen SRU's.

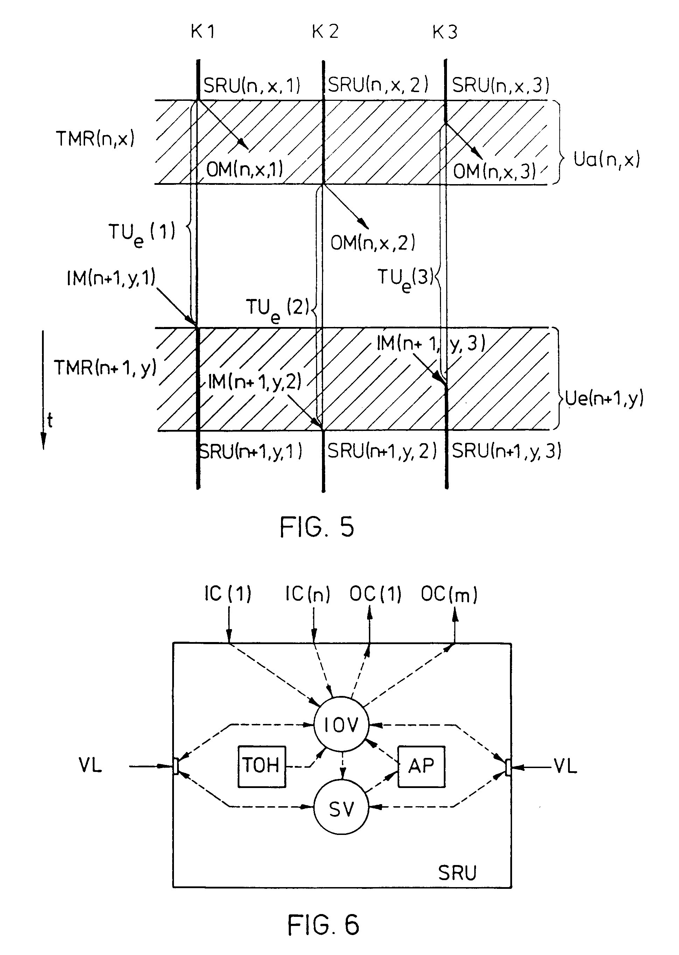

Fig. 5 zeigt die zeitliche Unschärfe bei der Übertragung einer Nachrichten-Triade zwischen zwei kaskadierten VOTRICS-Systemen. Die Kommunikation zwischen benachbarten VOTRICS-Knoten erfolgt über 'Nachrichten-Triaden': drei identische Nachrichten werden zwischen den drei SRU-Paaren zweier benachbarter VOTRICS-Knoten über die drei Verbindungsleitungen ausgetauscht. Aufgrund der unterschiedlichen Verarbeitungszeiten in den SRU's des sendenden und empfangenden VOTRICS-Knotens und auch durch mögliche Unterschiede in den Übertragungszeiten (serielles Übertragungsverfahren) treffen die Nachrichten einer Triade mit einer zeitlichen Unschärfe bei den Empfängerprozessen ein.

In diesem Beispiel senden die im Knoten TMR-(n,x) (aus Fig. 2) vorhandenen drei Rechnereinheiten SRU(n,x,1) SRU(n,x,2) und SRU(n,x,3) auf den Kanälen K1, K2, K3 die Outputnachrichten OM-(n,x,1), OM(n,x,2) und OM(n,x,3) aus. Die max. Ausgangsunschärfe Uamax(n,x) ist in diesem Fall durch den zeitlichen Abstand der Outputnachrichten OM(n,x,1) und OM(n,x,2) gegeben. Aufgrund unterschiedlicher Übertragungszeiten TUe1, TUe2, TUe3 ist die Übertragungsschärfe Utue(n,x - n + 1,y) im vorliegenden Beispiel TUe2 minus TUe1. Die maximale zeitliche Eingangsunschärfe mit der eine Nachrichten-Triade beim Destinationsknoten eintrifft, ergibt sich aus

$$Uemax(n + 1, y) = Uamax(n,x) + Utue(n,x \ n + 1,y).$$

Trotz zeitlicher Unschärfe gilt, daß beim Empfänger auf jedem einzelnen Inputkanal einer Triade im Normalfall (keine Übertragungsfehler) die gleiche Folge von Nachrichten eintrifft. Sind mehrere Inputkanäle an jede SRU angeschlossen (Konvergenz, siehe Fig. 4) so gilt dies für die Summe der von diesen Kanälen empfangenen Nachrichten nicht mehr. Durch die zeitlichen Unschärfen bei der Übertragung der Nachrichten-Triaden auf unterschiedlichen Kanälen kommt es zu Überholungsvorgängen, was dazu führt, daß die von jeder SRU eines VOTRICS-Systems empfangenen Nachrichtenfolgen ungleich sind. Würde eine solche resultierende Nachrichtenfolge unverändert an die Applikationsprozesse weitergeleitet, so würde dadurch ein unterschiedliches Verhalten der Applikationsprozesse der einzelnen SRU's hervorgerufen, das TMR-System wäre nicht mehr synchronisiert.

Der in VOTRICS zur Lösung dieses Problems eingesetzte Synchronisationsalgorithmus beruht auf dem Prinzip eines verteilten 'Sequence-Voting' über die von den einzelenen SRU's eines TMR-Systems an die Applikationsprozesse weitergegebene Folge von Input-Nachrichten, das in einem späteren Abschnitt beschrieben wird.

Das Zeitverhalten der Applikationsprozesse wird durch Timeout-Nachrichten gesteuert. Da die Takte nicht synchronisiert sind und die Applikationsprozesse mit erheblichen Zeitunschärfen in den drei Rechnereinheiten ablaufen, ist die Folge der Timeout-Nachrichten nicht notwendigerweise in allen drei Einheiten identisch. Man kann aber die vom Betriebssystem erzeugten Timeout-Nachrichten als einen zusätzlichen Inputkanal betrachten und daher werden identische Timeout-Nachrichten an die Applikationsprozesse an alle Rechnereinheiten gesendet.

Im folgenden wird nun anhand der Fig. 6 das Zusammenspiel der Voterfunktionen in einer Rechnereinheit SRU dargelegt.

Beim verteilten Voting wird von drei unabhängigen Votern (ein voter pro SRU) gemeinsam über ein Objekt (z.B. eine Nachricht, ein Datenrecord etc.) abgestimmt. Im Zuge des Votingvorganges sendet jeder das aktuelle Objekt verpackt in eine Voting-Nachricht an seine beiden Nachbarn. Jeder Voter vergleicht sein eigenes Objekt mit den beiden anderen und trifft dann für sich eine unabhängige 2von3 Entscheidung. Im Normalfall wird dieses Ergebnis weitergegeben, im Fehlerfall wird die Ausgabe unterdrückt und der Fehler an einen zentralen Fehler-Verarbeitungs-Prozeß gemeldet.

Die Voter können für die unterschiedlichsten Aufgaben eingesetzt werden, folgende Basis-Funktionen werden von jedem Voter ausgeführt: Fehlerkennung, Fehlermaskierung und Synchronisation.

Je nach Aufgabe des Voters haben diese Funktionen unterschiedliches Gewicht.

Je nachdem, ob über eine oder mehrere logische Nachrichtenquellen gleichzeitig gevotet werden soll wird zwischen Sequenz-Voting und Input/Output-Voting unterschieden. In jeder Rechnereinheit SRU existiert ein Input/Output-Voter IOV, der mittels Votinglinks VL mit seinen Nachbar-Votern eine Voter-Triade bildet. Dieser Voter hat nun über alle ankommenden oder abgehenden Nachrichten-Triaden eines VOTRICS-Knotens zu voten. Die Quelle für ankommende Nachrichten-Triaden sind die Inputkanäle IC1...ICn und der Timeout-Handler TOH des Operatingsystems. Die abgehenden Nachrichten die vom Applikationsprozessor AP erarbeitet werden, verlassen den VOTRICS-Knoten über die Outputkanäle OC1...OCm nachdem sie von der Input-Output-Votertriade als richtig erkannt wurden.

Bedingt durch die Übertragungsunschärfe in den Inputkanälen und den unsynchronisierten Systemtakt, sind die Inputnachrichten-Sequenzen, die von den Input/Output-Votern erzeugt werden, in jeder SRU unterschiedlich, obwohl die Menge von Nachrichten in jeder Sequenz gleich sind. Alle Inputnachrichten-Triaden, die während des Inputvotings als richtig angenommen wurden, werden daher an den Sequenz-Voter SV umgeleitet, wo eine einheitliche Sequenz der Nachrichten hergestellt wird und dann an den Applikationsprozess weitergegeben wird.

Voter haben die Aufgabe Fehlersituationen zu erkennen und wenn möglich zu maskieren, können aber keine systemweiten Maßnahmen wie z.B. Anhalten der eigenen SRU, Recovery etc. durchführen. Zu diesem Zweck wird ein 'Error Monitoring Process' (EMP) eingeführt, der sämtliche von den Votern erkannten Fehler (auch die maskierten) gemeldet erhält.

Die Verbindungen zwischen VOTRICS-Knoten (Triaden serieller Datenkanäle) sind aufgrund der möglichen großen Entfernungen am stärksten den Störeinflüssen der Umwelt ausgesetzt. Pro Input-Kanal-Triade (IC) gibt es daher eine Input/Output-Voter-Triade, welche über die auf diesem IC empfangenen Signale votet. Es wird sowohl über die Richtigkeit der Reihenfolge als auch über den Inhalt und Zeitkorrektheit der Signale gevotet. Die resultierende Signal-Folge dieses Votings wird an den Sequence-Voter weitergeleitet, der später erklärt wird. Es ist die Aufgabe des Input/Output-Voters, Fehler in der Inputsignaltriade, zu erkennen und zu maskieren.

In VOTRICS kann jeder Applikationsprozeß eine oder mehrere von einander unabhängig ablaufende Zeitüberwachung starten. Nach dem Ablaufen eines solchen Timeouts erhält der Prozeß vom Betriebssystem eine von ihm selbst beim Starten des Timeouts spezifizierte Nachricht.

Es wird normalerweise auch geschehen, daß ein Timeout in einer SRU abläuft und in beiden anderen nicht (oder umgekehrt). Obwohl dies keine Fehlersituation darstellt, ist es nicht erstrebenswert solche Situationen im Sequence-Voter zu behandeln (der Sequence-Voter würde durch eine Sonderbehandlung der Timeout-Nachricht um einiges komplexer). Die Timeout-Signale werden daher an den Input/Output-Voter weitergeleitet, der dann sicherstellt, daß nur vollständige Timeout-Nachrichten-Triaden an die Sequence-Voter-Triade weitergeleitet werden.

Die Input/Output-Votertriade votet auch über all Signale, die den VOTRICS-Knoten verlassen. Der Zweck des Outputvotens ist die Erkennung von Fehlern in den Nachbareinheiten, die Fehlermaskierung und das Versehen der Output-Triade mit einer einheitlichen Kennung. Die Sequenz der Signale verläßt den Votrics-Knoten in der selben Folge, wie sie vom Applikationsprozess hergestellt wurde.

Obwohl jedes konkrete Input/Output-Voten nur über drei redundante Objekte (in den meisten Fällen Signaltriaden) durchgeführt wird, müßen die Input/Output-Voter die Sequenzen solcher Triaden korrekt verarbeiten. Daraus ergeben sich einige Randbedingungen:

- Die Triaden eines logischen Kanals (beispielsweise eines Inputkanals) müssen in der selben Reihenfolge ausgegeben werden, wie sie angekommen sind. Da ein triplizierter Kanal drei identische Signalsequenzen erzeugt, ist eine einheitliche Folge in den Signaltriaden festgelegt.

- Die Folge in der Signale von unterschiedlichen logischen Kanälen übertragen werden, ist willkürlich.
- Eine fehlerhafte Triade darf die Verarbeitung anderer Triaden im selben Voter nicht beeinträchtigen.

Triaden von unterschiedlichen logischen Kanälen sollten daher parallel verarbeitet und übertragen werden, während aufeinanderfolgende Triaden auf einem einzelnen logischen Kanal sequenziell übertragen werden müßen.

Aufgrund der Randbedingungen unter denen Signaltriaden bei einem VOTRICS-Knoten ankommen, können einander die Triaden auf verschiedene Weise beeinflussen, und zwar durch

- Triadenüberlappung auf einem einzelnen logischen Kanal: Wenn der Zeitabstand zwischen dem Eintreffen von Triaden kleiner ist als die Zeitunschärfe innerhalb der drei Signale der Triade, dann kann es beispielsweise vorkommen, daß das Signal am "eigenen" Inputkanal des Voters später ankommt als ein oder beide Votingsignale einer nachfolgenden Triade (die Inptsignale welche die Nachbarvoter erhalten und weitergeben). Im Falle einer "schadhaften" Triade, d.h. einer Triade mit fehlerhaftem oder nicht vorhandenem Signal, können noch viel komplexere Situationen entstehen.
- Kanalüberlappung: Der Input/Output-Voter muß Triaden aus mehreren logischen Inputkanälen verarbeiten (mindestens aus einem physikalischen Inputkanal und einem Timeouthandler). Die Signale solcher Triaden können in beliebiger Reihenfolge eintreffen.

Der Input/Output-Voter muß daher in der Lage sein, jede beliebige Kombination von Triaden - und Kanalüberlappung zu verarbeiten.

Im folgenden wird der sämtlichen Voter-Typen zugrunde liegende Votingalgorithmus beschrieben.

Das Grundprinzip des hier angewandten verteilten Votings besteht darin, daß jeder Voter den Inhalt einer von ihm empfangenen Input-Nachricht durch Aussenden von 'Votingnachrichten' an seine Partner weitergibt. Eine Ausgabe des Voting-Resultates (z. B. im Falle des IOV Weitergabe an den Sequence-Voter) erfolgt ausschliesslich aufgrund einer 2von3 Majoritätsentscheidung (Commitment).

Aufgrund der unvermeidlichen zeitlichen Unschärfe im Eintreffen der Inputnachrichten wird es in der Regel vorkommen, daß ein Voter eine oder beide Votingnachrichten vor der eigenen Inputnachricht erhält. Nach dem Eintreffen der ersten Nachricht eines neuen Commitments wartet der Voter zeitüberwacht (Voterzeitkonstante) auf die restlichen, zum Commitment gehörigen Nachrichten. Bereits nach Erhalt der ersten der beiden fehlenden Nachrichten vergleicht er sie inhaltlich miteinander und geht dabei nach den folgenden Regeln vor:

Fall 1) Wenn Nachrichten ident, dann Commitment und Ausgabe des Votingresultats.

Fall 2) Wenn Nachrichten nich ident, dann starte zweites Timeout

$TO'$ ( $TO = TO'$ ). Zeitüberwachtes Warten auf dritte Inputnachricht.

Fall 2a) Bei zeitgerechtem Eintreffen der dritten Nachricht innerhalb des Timeout TO, wenn Nachricht 3 mit Nachricht 1 ident und Nachricht 2 falsch ist, dann 2von3-Majoritätsentscheidung und Ausgabe wie oben.

Fall 2b) Bei zeitgerechtem Eintreffen der dritten Nachricht innerhalb des zweiten Timeout $TO'$, wenn Nachricht 3 mit Nachricht 2 ident und Nachricht 1 falsch ist, dann 2von3 Majoritätsentscheidung und Ausgabe wie oben.

Fall 2c) Wenn kein Eintreffen gleicher Nachrichtenpaare innerhalb des Timeouts TO oder $TO'$, dann Majoritätsentscheidung und keine Ausgabe eines Votingsresultates.

Dieser Votingalgorithmus bezieht sich auf jeweils eine Nachrichten-Triade. Ein Voter kann über mehrere Triaden gleichzeitig voten um nach Triaden- oder Kanalüberlappung zu suchen, jedoch muß die Sequenz der Commitments über jeden logischen Kanal den Inputsequenz dieses logischen Kanals entsprechen.

Im folgenden wird nun das Sequenz-Voten beschrieben. Aufgabe der Sequence-Voter-Triade ist die koordinierte Weiterleitung einer einheitlichen Input-Nachrichten-Folge an die Applikationsprozesse jeder SRU. Jeder Sequence-Voter erhält die vom IOV erzeugten Nachrichten-Folgen und vereinigt sie in Abstimmung mit seinen Nachbarn zu einer von allen drei Sequence-Votern akzeptierten resultierenden Nachrichten-Folge. Die richtig gereihten Signale, die in jeder Rechnereinheit (SRU) identisch sind, werden dann an die Applikationsprozesse weitergegeben, um deren Abläufe zu synchronisieren.

Der Sequenz-Voter führt ebenso wie andere Voter Fehlermaskierung durch. Erkennt ein Sequenz-Voter jedoch einen Fehler, so bedeutet dies in jedem Fall eine kritische Situation. Mit sehr hoher Wahrscheinlichkeit ist der Voter, von dem die betreffende Nachricht stammt defekt. Handelt es sich dabei um einen Fehler in der eigenen SRU, so wird diese in der Folge vom 'Error-Monitoring-Process' angehalten.

Ein Problem für sich stellt die Kommunikation über die Votingslinks dar. Über diese Kanäle kommunizieren die zusammengehörigen Voter jeweils einer Triade miteinander. Die von einem Voter zu bearbeitenden Nachrichten werden in Votingnachrichten 'verpackt' und an die beiden Nachbarn derselben Voter-Triade gesandt. Sowohl physikalisch als auch logisch bilden die Votinglinks die einzigen Verbindungen zwischen den SRU's eines VOTRICS-Systems. Um eine maximale Unabhängigkeit des individuellen Fehlerverhaltens der SRU's eines VOTRICS-Systems zu erreichen, muß verhindert werden, daß Nachbar-SRU's über die Votinglinks Fehler ex- bzw. importieren können.

Das von Leslie Lamport gebrachte Beispiel der 'lügenden Uhr' (siehe oben genannten Artikel in Journal of the ACM, Vol 32 No 1, pp. 52 - 78, Jan. 1985) läßt sich unmittelbar auf die Problematik des Votens übertragen. Durch Verfälschung der Kommunikation mit den beiden Nachbarvotern könnte bei Fehlen geeigneter Maßnahmen eine SRU ihre beiden Nachbarn täuschen und sich beim Voten zwei Stimmen verschaffen. Als Folge davon könnte die Synchronizität des TMR-Systems verloren gehen bzw. im schlimmsten Fall unterschiedlicher Output durch die Outputvoter das System verlassen was eine Verletzung des Failsafe-Prinzips bedeutet.

Ein weiteres Fehlerereignis, das vor allem der Effizienz eines VOTRICS-Systems (hier vor allem dem Zeitverhalten) schadet, ist der Ausfall eines Votinglinks. Wird hier keine Gegenmaßnahme gesetzt, so verschlechtert sich in diesem Fall das Zeitverhalten des Gesamtsystems gravierend und die Eingangsunschärfe der Inputnachrichten-Triade geht beim Voten voll in die Commitment-Unschärfe ein.

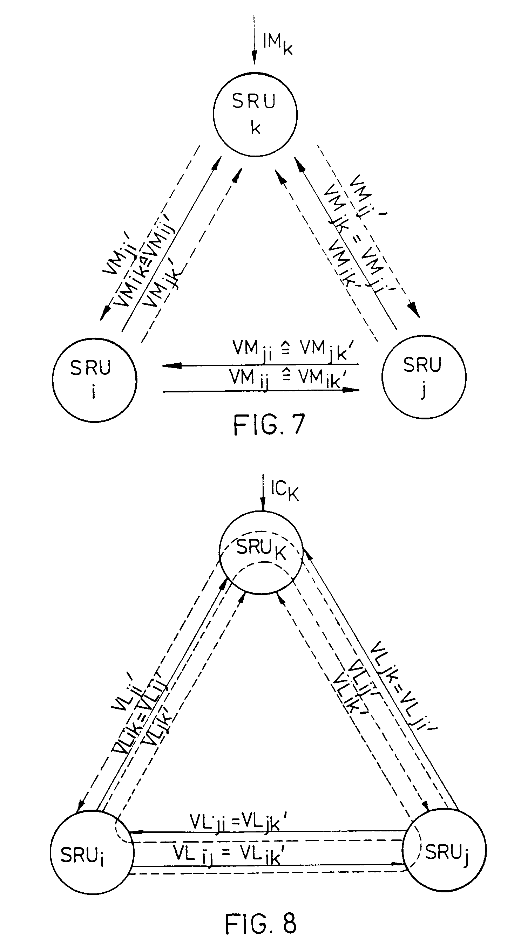

Die im folgenden beschriebene Methode löst beide Probleme durch den Einsatz von Redundanz im Zeitbereich bei der übertragung auf den Votinglinks. In der Kommunikationsebene wird ein zusätzlicher Mechanismus eingeführt, der dafür sorgt, daß Votingnachrichten über zwei unterschiedliche Wege an die Destinations-SRU gelangen (Fig. 7). Diese Maßnahme resultiert in einer virtuellen Verdopplung jedes Votinglinks (Fig. 8).

Aus einer früher von SRUk für einen vollständigen Votingvorgang notwendigen Nachrichten-Triade nämlich Inputnachricht IMk, Votingnachrichten VMik und VMjk wird jetzt, wie in Fig. 7 gezeigt, ein Quintupel und zwar Inputnachricht IMk, Votingnachrichten VMik und VMjk sowie zusätzlich die zu der jeweils anderen Rechnereinheit SRUj bzw. SRUi gesendeten virtuellen Votingnachrichten VMik' und VMjk'. Im fehlerfreien Fall gilt VMik = VMik' = VMjk = VMjk'.

Aus Fig.8 ist die daraus resultierende Anordnung der Votinglinks für die Rechnereinheit SRUk ersichtlich. Der Voter dieser Einheit erhält demnach seine oben angeführten Votingnachrichten aus dem Inputkanal ICk und den Votinglinks VLjk von der Rechnereinheit SRUj und VLik von der Rechnereinheit SRUi und aus den zusätzlichen virtuellen Votinglinks VLjk' von der Rechnereinheit SRUj über SRUi und Vlik von der Rechnereinheit SRUi über SRUj.

Lügt beispielsweise SRUi, so gilt VMij = VMik. VMij wird von SRUj an SRUk weitergeleitet (VMik'), VMik von SRUk an SRUj (VMij'); sowohl SRUj als auch SRUk können voneinander unabhängig durch überprüfen der Bedingungen (VMij = VMij') bzw. (VMik = VMik') feststellen, daß SRUi lügt. In beiden Fällen ist die Bedingung nicht erfüllt.

Der Algorithmus wie er bisher beschrieben wurde hat allerdings noch den Mangel, daß eine Votingnachricht bei der Duplizierung durch die Nachbar-SRU verfälscht werden könnte. Um zu verhindern, daß eine SRU beim Duplizieren und Weiterleiten einer Votingnachricht unerkannt lügen kann, wird ein weiterer Schutzmechanismus eingeführt.

Jede SRU schützt die von ihr produzierten Votingnachrichten mit einer individuellen, eindeutigen Signatur. Die Codierfunktion ENCODEn(VMnx) ist für alle n = i,j,k unterschiedlich. Außerdem kennt jede SRU nur ihren eigenen Codieralgorithmus. Z.B. ist ENCODEi(VMix) nur SRUi bekannt. Die Decodierfunktionen DECODEn(VMnx) für n = i,j,k sind allen drei SRU's bekannt.

Jede Votingnachricht wird von der Ursprungs-SRU mit ihrer individuellen Signatur versehen. Beim Duplizieren durch die Nachbar-SRU wird keine Signatur mehr aufgebracht. Die Destinations-SRU kann den ihr bekannten Dekodieralgorithmus anwenden und so überprüfen, ob die Nachricht auf dem Weg durch die Nachbar-SRU Schaden erlitten hat.

Beispiel: SRUi produziert VMij und VMik. Vor dem Senden an SRU j bzw. SRUk wird die Signatur aufgebracht und zwar für VMij : "ENCODEi-(VMij)" und für VMik: "ENCODEi(VMik)". SRUj dupliziert VMij und sendet (ohne eine eigene Signatur aufzubringen) VMij an SRUk weiter, gleichzeitig führt SRUj aber auch die Decodierungsfunktionen für die eigene Nachricht aus (DECODEi(VMij)). SRUk empfängt VMik und VMik' und führt die Decodierungsfunktion DECODEi(VMik) und DECODEi(VMik') aus; außerdem produziert SRUk noch eine VMij (allerdings ohne eigene Signatur) und sendet sie an SRUj wo sie empfangen, mit DECODE(VMij') entschlüsselt und mit der ebenfalls entschlüsselten VMi'j verglichen wird.

Auch das Zeitverhalten des Systems bei ausgefallenem Votinglink wird dahingehend verbessert, daß in dieser Situation beim Voting die Eingangssunschärfe nicht mehr in die Commitmentunschärfe eingeht. Man muß allerdings die doppelte Anzahl an Votingmessages (4 statt 2 pro SRU und Commitment) und den Overhead der Signatur-Kodierung und Dekodierung in Kauf nehmen.

**Patentansprüche**

1. Fehlertolerantes Datenverarbeitungssystem bestehend aus mehreren Rechnereinheiten (SRU), sowie mehreren logischen Entscheidungseinrichtungen (Votern) die die Richtigkeit einer Nachricht aus der bezogen auf die Gesamtzahl der Rechnereinheiten vorgegebenen Mehrheit der Nachrichten ableiten**, dadurch gekennzeichnet,**

   - daß jeder Rechnereinheit (SRU) ein Input/Output-Voter (IOV) zugeordnet ist, der über die Input- bzw. Output-Nachrichten der Inputkanäle (IC) bzw. Outputkanäle (OC) aller Rechnereinheiten (SRU) eines selben Votingknotens (TMR) abstimmt, wobei jeder Votingknoten aus mehreren Rechnereinheiten (SRUs) besteht,
   - daß jeder Input/Output-Voter (IOV) den Inhalt der von ihm über die Inputkanäle (IC 1,...ICn) bzw. über die Outputkanäle (OC 1,..OCm) empfangenen Nachricht (IM) durch Aussenden einer Votingnachricht (VM) mittels Votinglinks (VL) an alle anderen im selben Votingknoten (TMR) befindlichen Input/Output-Voter weitergibt, sodann jeder Input/Output-Voter (IOV) über seine eigene und alle die von den anderen Input/Output-Voter desselben Votingknotens von ihm empfangenen Votingnachrichten (VM) abstimmt,
   - daß jeder Rechnereinheit (SRU) ein Sequenzvoter (SV) für die Entscheidung über die korrelate Reihenfolge der zu Verarbeitenden Nachrichten zugeordnet ist, dem die während des Input/Output-Votings als richtig erkannte Nachricht zugeführt wird,
   - daß jeder Sequenzvoter (SV) den Inhalt der von ihm empfangenen Nachricht durch Aussenden einer Sequenzvotingnachricht mittels Votinglinks an alle anderen im selben Votingknoten (TMR) befindlichen Sequenzvoter (SV) weitergibt, sodann ein Voting über alle erhaltenen Sequenzvotingnachrichten einschließlich der eigenen Nachricht durchführt und die als richtig erkannte einheitliche Nachrichtensequenz an seinen eigenen Applikationsprozeß (AP) weitergibt.

2. Fehlertolerantes Datenverarbeitungssystem nach Anspruch 1, **dadurch gekennzeichnet,** daß jeder Voter (IOV, SV) die von ihm empfangene Votingnachricht (VM) eines anderen Voters desselben Votingknotens an alle übrigen Voter desselben Votingknotens weitergibt. (Fig. 7,8).

**Claims**

1. Fault-tolerant data processing system consisting of several computer systems (SRU), as well as of several logical decision units (VOTERS) which derive the correctness of an information message from the predetermined majority of information messages, said majority of information messages relating to the total number of computer systems, **characterized in that**

   - an input/output voter (IOV) is assigned to each computer system (SRU) which votes on the input- or output messages, respectively, of the input- (IC) or output channels (OC), respectively, of all computer systems (SRU) of a same voting node (TMR), whereby each voting node consists of several computer systems (SRUs),
   - each input/output voter (IOV) passes on the contents of the information message (IM) it receives via the input channels (IC 1, ...ICn) or the output channels (OC 1, ...OCm), respectively, to all other input/output voters in the same voting node (TMR) by issuing a voting message (VM) by means of voting links (VL), and then each input/output voter (IOV) votes on its own voting message (VM) and all voting messages (VM) it receives from the other input/output voters of the same voting node,
   - to each computer system (SRU) a sequence voter (SV) is assigned to which the message recognized to be the correct one to decide on the correct sequence of the information messages to be processed during the input/output voting is supplied,
   - each sequence voter (SV) transmits the contents of the information message it receives to all other sequence voters (SV) in the same voting node (TMR) by issuing a sequence voting message by means of voting links, then performs voting on all received sequence voting messages including its own message and transmits the uniform message information sequence recognized to be the correct one to its own application process (AP).

**2.** Fault-tolerant data processing system according to claim 1, **characterized in that** each voter (IOV, SV) transmits the voting message (VM) received from another voter of the same voting node to all other voters of the same voting node (Fig. 7, 8).

## Revendications

**1.** Système de traitement des données tolérant les erreurs, constitué de plusieurs organes de calcul (SRU), ainsi que de plusieurs organes de décision logique (organes de votation) qui, à partir de la pluralité d'informations fournie rapporté au nombre total des organes de calcul, déduisent l'exactitude d'une information, système caractérisé

- en ce qu'à chaque organe de calcul (SRU) correspond un organe de votation d'entrée/sortie (IOV) qui émet un vote relativement aux informations d'entrée ou de sortie des canaux d'entrée (IC) ou des canaux de sortie (OC) de tous les organes de calcul (SRU) d'un même noeud de votation (TMR), chaque noeud de votation étant constitué de plusieurs organes de calcul (SRU);

- en ce que chaque organe de votation d'entrée/sortie (IOV) transmet, à tous les autres organes de votation d'entrée/sortie qui se trouvent dans le même noeud de votation (TMR), par émission d'une "information pour votation" (VM) et au moyen d'une liaison de votation (VL), le contenu de l'information (IM) reçue, par lui, par l'intermédiaire des canaux d'entrée (IC 1, ...ICn) ou par l'intermédiaire des canaux de sortie (OC 1, ... OCm), puis que chaque organe de votation entrée/sortie (IOV) émet un vote relativement à ses propres informations de votation et relativement à toutes les informations de votation reçues par lui de la part des autres organes de votation d'entrée/sortie du même noeud de votation;

- en ce qu'à chaque organe de calcul (SRU) correspond un "organe de votation relativement à une séquence" (SV), organe auquel est amenée l'information reconnue comme exacte, pour la décision relative à la succession corrélée des informations à traiter, pendant la votation d'entrée/sortie;

- en ce que chaque "organe de votation relativement à une séquence" (SV) transmet à tous les autres "organes de votation relativement à une séquence" (SV) qui se trouvent dans le même noeud de votation (TMR), par émission d'une "information pour votation relativement à une séquence" et au moyen de liaisons de votation le contenu de l'information reçue par lui puis que cet organe de votation procède à une votation relativement à toutes "les informations pour votation relativement à une séquence" reçues, sa propre information comprise, et transmet à son propre processus d'application (AP) la séquence homogène d'informations reconnue comme exacte.

**2.** Système de traitement des données tolérant les erreurs selon la revendication 1, caractérisé par le fait que chaque organe de votation (IOV, SV) transmet à tous les autres organes de votation du même noeud de votation l'information pour votation (VM), reçue par lui, d'un autre organe de votation du même noeud de votation (figures 7, 8).

FIG. 1

FIG. 2

FIG. 3

FIG. 4

EP 0 246 218 B1

FIG. 5

FIG. 6

14

FIG. 7

FIG. 8